Europäisches Patentamt

European Patent Office

Office européen des brevets

(11) Numéro de publication: **0 255 434**
**A1**

## (12) DEMANDE DE BREVET EUROPEEN

(21) Numéro de dépôt: **87401740.3**

(51) Int. Cl.⁴: **F 16 F 13/00**

(22) Date de dépôt: **24.07.87**

(30) Priorité: **30.07.86 FR 8611042**

(43) Date de publication de la demande:
**03.02.88 Bulletin 88/05**

(84) Etats contractants désignés:
**AT BE DE ES GB IT LU NL SE**

(71) Demandeur: **HUTCHINSON**
**2 rue Balzac**
**F-75008 Paris (FR)**

(72) Inventeur: **Bellamy, Alain**
**2, Impasse de Lubidet**
**F-41100 Vendome (FR)**

**Petit, Pascal**
**27, rue Foucault**
**F-28200 Chateaudun (FR)**

**Vezie, Jean-Paul**
**19, rue Branly**
**F-28200 Chateaudun (FR)**

(74) Mandataire: **Behaghel, Pierre et al**
**CABINET PLASSERAUD 84 rue d'Amsterdam**
**F-75009 Paris (FR)**

(54) **Perfectionnements aux supports amortisseurs hydrauliques.**

(57) Il s'agit d'un support antivibratoire hydraulique comprenant un manchon central (1) d'axe vertical, un collier (2) coaxial au manchon et deux bagues en élastomère ($3_1, 3_2$) adhérées respectivement sur le manchon et sur le collier et délimitant avec ceux-ci une chambre annulaire étanche (4), une cloison rigide (5) solidaire du manchon divisant cette chambre en deux compartiments qui communiquent entre eux par un passage étranglé (6) et ladite chambre étant remplie d'un liquide (0). Le manchon et le collier sont composés chacun de deux demi-armatures ($1_1, 1_2$ ; $2_1, 2_2$) qui sont adhérées sur les bagues en élastomère selon des surfaces tronconiques qui convergent vers l'extérieur du support et la cloison rigide est solidarisée avec l'armature interne et bordée périphériquement par un bourrelet épaissi (19).

EP 0 255 434 A1

## Description

### Perfectionnements aux supports amortisseurs hydrauliques.

L'invention concerne les dispositifs destinés à être interposés entre deux pièces rigides aux fins de support de l'une par l'autre avec amortissement de leurs oscillations ou vibrations relatives, les deux pièces en question étant par exemple respectivement le moteur à combustion interne d'un véhicule et le châssis de ce véhicule.

Elle concerne plus particulièrement, parmi les dispositifs de support du genre en question, ceux qui comportent un anneau rigide solidarisable avec l'une des pièces, un manchon central coaxial à l'anneau et solidarisable avec l'autre pièce, deux bagues en élastomère adhérées toutes les deux intérieurement sur le manchon et extérieurement sur l'anneau et délimitant avec ces deux armatures une chambre annulaire étanche, une cloison rigide annulaire solidaire de l'une des deux armatures et divisant la chambre en deux compartiments qui communiquent entre eux par un passage annulaire étranglé réservé entre cette cloison et l'autre armature, et une masse de liquide remplissant la chambre et le passage étranglé.

L'invention concerne plus particulièrement encore le cas où le manchon central est dégagé à ses deux extrémités axiales de façon à pouvoir recevoir jointivement une broche dont une extrémité est solidaire de l'une des deux pièces rigides à réunir et dont l'autre extrémité se prête à une fixation amovible sur le manchon, de préférence par vissage.

Dans les modes de réalisation habituellement proposés pour les dispositifs de support considérés (voir par exemple le document EP-A-0 044 908), les faces, des bagues en élastomère, qui sont rapportées jointivement sur les armatures rigides qui les encadrent, sont cylindriques de révolution.

Or ces bagues sont adhérées par vulcanisation et moulage à chaud sur les faces en question.

Par conséquent, lors du refroidissement subséquent, le retrait exercé sur la masse élastomère constitutive de chaque bague tend à décoller cette masse des armatures cylindriques qui l'encadrent et l'on est obligé, pour rétablir ou renforcer l'adhérence au niveau desdites bagues, de faire subir une expansion radiale à l'armature interne par dudgeonnage et/ou un rétreint radial à l'armature externe.

De plus les performances des dispositifs de support en question, aussi bien en ce qui concerne leur résistance aux sollicitations alternatives de compression et traction que l'amortissement des oscillations engendrées par ces sollicitations, varient notablement avec la direction selon laquelle lesdites sollicitations sont exercées, ces performances étant en particulier très différentes selon que l'on considère la direction axiale ou une direction radiale.

Par ailleurs, dans les modes de réalisation habituels, signalés ci-dessus, des dispositifs de support considérés, l'armature dont la cloison rigide annulaire est solidaire est l'armature externe.

Dans ces conditions, le passage étranglé annulaire présente un diamètre moyen relativement petit, et donc une section droite relativement faible pour une largeur donnée.

Or il convient que cette largeur soit à la fois suffisamment petite pour que le passage étranglé joue correctement son rôle d'amortissement hydraulique et suffisamment grand pour que le volume total de liquide impliqué suffise pour assurer l'amortissement désiré et pour que le support puisse subir des débattements transversaux d'amplitude suffisante.

Il convient également que la longueur axiale dudit passage soit relativement grande, ou plus précisément que le rapport entre cette longueur et le "diamètre fictif" dudit passage, lequel est proportionnel à la racine carrée de sa section droite, soit relativement grand : on sait en effet que la fréquence $F$ des oscillations qui sont amorties au maximum par les supports du genre en question est directement liée au rapport ci-dessus.

Dans la pratique, il est difficile de satisfaire simultanément à l'ensemble de ces conditions, notamment si l'on désire donner à la fréquence $F$ ci-dessus une valeur relativement élevée, par exemple de l'ordre de 150 Hz ou plus, lorsque le passage étranglé est localisé à l'intérieur, c'est-à-dire à proximité de l'armature interne.

L'invention a pour but, surtout, de remédier à l'ensemble de ces différents inconvénients.

A cet effet, les dispositifs de support du genre en question selon l'invention comprennent, d'une façon connue en soi, deux composants annulaires constitués chacun par une demi-armature interne, une demi-armature externe et une bague intermédiaire en élastomère adhérée respectivement sur ces deux demi-armatures, chacune des deux armatures interne et externe étant formée par juxtaposition axiale des deux demi-armatures correspondantes, la solidarisation entre la cloison rigide annulaire et l'armature correspondante étant assurée par son serrage axial entre les deux demi-armatures composant cette armature, et ces dispositifs de support sont caractérisés essentiellement en ce que cette dernière armature est l'armature interne, en ce que la portion de plus grand diamètre de la cloison rigide annulaire se présente sous la forme d'une bourrelet épaissi axialement, en ce que chacune des faces le long desquelles les bagues sont adhérées sur les demi-armatures internes présente une forme tronconique de révolution ou analogue autour de l'axe du dispositif, avec convergence vers l'extérieur de celui-ci, et en ce que la face, de chaque bague, délimitant la chambre étanche et donc tournée vers le bourrelet, présente elle-même une forme tronconique de révolution ou analogue autour de l'axe du dispositif, avec divergence vers l'extérieur de celui-ci.

Dans des modes de réalisation préférés, on a recours en outre à l'une et/ou à l'autre des dispositions suivantes :
- le bourrelet épaissi est délimité axialement par des surfaces propres à servir d'appui progressif aux bagues en élastomère lors de l'exercice de fortes sollicitations axiales sur le dispositif,

- l'application de chaque bague en élastomère contre l'armature interne est renforcée par précontrainte axiale,

- les deux demi-armatures internes sont juxtaposées axialement l'une contre l'autre et maintenues dans cet état par un tronçon de tube qui les traverse jointivement et dont les extrémités axiales sont rabattues radialement vers l'extérieur,

- la cloison rigide annulaire qui sépare la chambre en deux compartiments est perforée de part en part.

L'invention comprend, mises à part ces dispositions principales, certaines autres dispositions qui s'utilisent de préférence en même temps et dont il sera plus explicitement question ci-après.

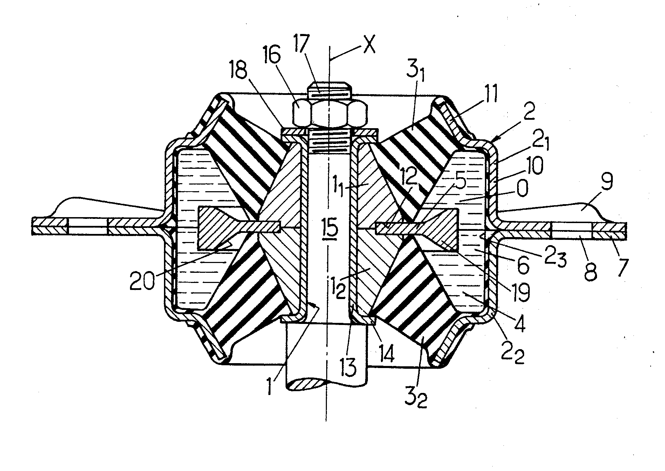

Dans ce qui suit, l'on va décrire un mode de réalisation préféré de l'invention en se référant au dessin ci-annexé d'une manière bien entendu non limitative.

La figure unique, de ce dessin, montre en coupe axiale un support antivibratoire hydraulique établi conformément à l'invention.

Ce support comprend :

- un manchon central 1 d'axe vertical X,

- un collier extérieur 2 coaxial au manchon 1,

- deux bagues intermédiaires en élastomère $3_1$ et $3_2$ adhérées intérieurement sur le manchon 1 et extérieurement sur le collier 2 et définissant avec ces deux armatures une chambre annulaire 4 fermée de façon étanche,

- une cloison annulaire rigide 5 solidaire du manchon 1 et divisant la chambre 4 en deux compartiments qui communiquent entre eux par un passage étranglé 6 réservé entre la périphérie de cette cloison 5 et la face interne en regard du collier 2,

- et une masse de liquide 0 remplissant la chambre 4 et le passage 6.

Le manchon 1 est constitué par deux demi-armatures annulaires identiques $1_1$ et $1_2$.

Chacune de ces deux demi-armatures présente une demi-section axiale pratiquement triangulaire délimitée par un premier côté intérieur parallèle à l'axe X, par un second côté radial destiné à être situé dans le plan transversal médian du support terminé, et par un troisième côté extérieur oblique.

Ce troisième côté définit un tronc de cône qui converge axialement vers l'extérieur du support.

Le collier 2 est également constitué par deux demi-armatures annulaires $2_1$ et $2_2$ constituées en une tôle emboutie.

Chacune de ces deux demi-armatures présente d'une part une aile radiale 7 percée en 8 et éventuellement nervurée en 9 et d'autre part un pan cylindrique 10 terminé par un rabat tronconique 11, lequel converge vers l'extérieur du dispositif.

Cette convergence est de préférence choisie de façon telle que ledit rabat 11 s'étende parallèlement à la face tronconique en regard de la demi-armature annulaire interne correspondante $1_1$ ou $1_2$.

Chacun des deux composants constitués par une bague en élastomère $3_1,3_2$ et par les deux demi-armatures $1_2,1_2$ ou $2_1,2_2$ qui l'encadrent est fabriqué de la manière suivante.

Comme il est usuel, la bague est moulée par vulcanisation à chaud et adhérée en même temps sur les deux demi-armatures en regard.

Au début de ce moulage, les deux demi-armatures sont légèrement décalées axialement l'une par rapport à l'autre en ce sens que la face plane transversale de la demi-armature interne déborde un peu axialement hors de la demi-armature externe.

Lors du refroidissement consécutif au moulage, la masse élastomère est soumise à des contraintes de retrait qui sollicitent au rapprochement mutuel les deux demi-armatures.

Un tel rapprochement ne serait pas possible si les faces en regard de ces dernières étaient cylindriques.

Comme elles sont ici tronconiques, le rapprochement en question est rendu possible par un léger déplacement axial de la demi-armature interne par rapport à l'autre, qui fait rentrer la première dans la seconde en annulant le léger décalage axial initial.

Ce rapprochement supprime automatiquement toute tendance au décollage mutuel entre la bague en élastomère et les faces, des deux demi-armatures rigides, sur lesquelles elle est adhérée.

Il est donc inutile de procéder ultérieurement à une déformation mécanique de l'une des deux demi-armatures par rapport à l'autre en vue de compenser cette tendance au décollage.

L'effet de résistance au décollage qui vient d'être signalé peut encore être renforcé, selon l'invention, en exerçant une précontrainte axiale sur chaque bague en élastomère par un déplacement axial relatif de chaque demi-armature centrale $1_1,1_2$ par rapport à la demi-armature externe correspondante $2_1,2_2$, le décalage axial initial relatif entre ces deux demi-armatures pouvant être prévu supérieur à celui qui serait rigoureusement nécessaire pour compenser simplement les contraintes engendrées dans la masse élastomère lors de son retrait dû au refroidissement.

Ce même effet pourrait être obtenu en interposant axialement une cale spéciale entre les deux demi-armatures internes lors du montage du support.

Pour monter ce support, on juxtapose axialement les deux composants fabriqués de la manière qui vient d'être décrite, avec interposition de la cloison 5, qui est avantageusement reçue dans une rainure complémentaire 12 évidée dans la portion de plus grand diamètre de la face transversale de chacune des deux demi-armatures internes $1_1,1_2$.

Puis on maintient juxtaposées axialement l'une contre l'autre :

- d'une part les deux ailes 7 en les soudant l'une sur l'autre,

- et d'autre part les deux demi-armatures internes $1_1$ et $1_2$ en introduisant un tronçon tubulaire rigide 13 à l'intérieur de celles-ci, puis en rabattant vers l'extérieur en 14 les deux extrémités axiales de ce tronçon sur les extrémités adjacentes desdites demi-armatures.

La chambre 4 formée entre les deux composants ainsi juxtaposés axialement est rendue étanche par application d'une part de portions des bagues en élastomère contre la cloison 5 et d'autre part de revêtements internes en élastomère $2_3$ des demi-armatures externes $2_1,2_2$ l'un contre l'autre.

Cette chambre 4 est remplie du liquide 0 de toute manière désirable, soit au cours même de la mise en juxtaposition des deux composants, alors effectuée à l'état immergé dans ledit liquide, soit après assemblage mutuel de ces composants.

La cloison 5 est bordée périphériquement par un bourrelet 19 épaissi axialement.

Cette mesure permet de prévoir sur ladite cloison deux plages tronconiques 20 délimitant axialement ledit bourrelet et propres à servir d'appui progressif et ferme aux bagues en élastomère $3_1, 3_2$ lors de leurs déformations correspondant aux très fortes sollicitations exercées axialement et/ou radialement sur l'une des armatures 1,2 par rapport à l'autre.

On réalise ainsi une butée de fin de course économique, souple et efficace.

Le diamètre extérieur de la cloison rigide 5, ou plus précisément de son bourrelet périphérique 19, est de préférence un peu supérieur au diamètre intérieur des rabats tronconiques 11 du collier 2.

Dans ces conditions, ladite cloison rigide 5 assure par elle-même une bonne résistance à la destruction du support par arrachement axial ou écrasement radial du fait que son bourrelet 19 vient buter contre le collier 2 lorsque le support est soumis à une sollicitation extrême dans n'importe quelle direction.

La présence dudit bourrelet 19 permet en outre d'augmenter la longueur axiale L de la couronne annulaire qui définit le passage étranglé 6.

Il est à noter également que le fait de rapporter la cloison intermédiaire 5 sur le manchon interne 1 plutôt que sur le collier externe 2 permet d'augmenter la section transversale globale S de ladite colonne.

L'ensemble de ces deux mesures permet de jouer plus facilement sur le rapport L/S, lequel détermine la fréquence F des oscillations les mieux amorties par le dispositif antivibratoire considéré : lorsque des sollicitations alternatives à ladite fréquence F sont appliquées sur le support, la masse liquide comprise dans le passage étranglé est mise en résonance, ce qui engendre un excellent amortissement.

Le passage étranglé 6 faisant communiquer entre eux les deux compartiments de la chambre 4 peut être secondé par au moins une perforation évidée de part en part dans la cloison rigide 5 : de telles perforations (non représentées) constituent des passages en parallèle sur le passage 6 et permettent d'adapter plus finement le support aux oscillations ou vibrations à amortir.

L'épaisseur axiale de chaque bague $3_1, 3_2$, c'est-à-dire son épaisseur considérée selon les directions parallèles aux génératrices des faces tronconiques encadrant cette bague, peut être constante sur toute l'étendue de celle-ci.

Dans le mode de réalisation préféré illustré, cette épaisseur décroît au fur et à mesure que l'on s'éloigne de l'axe X, mais les deux faces libres desdites bagues, c'est-à-dire non adhérées sur les armatures qui les encadrent, présentent toutes les deux une forme tronconique de révolution.

En jouant sur les angles de conicité des faces tronconiques sur lesquelles sont adhérées les bagues en élastomère $3_1, 3_2$, on peut modifier les résistances du support aux différents efforts alternatifs de compression et de traction qui sont exercés sur lui selon différentes directions, ce support étant donc apte à encaisser des efforts orientés selon des directions autres que la direction axiale.

C'est là un autre avantage du support proposé sur ceux du même genre pour lesquels les bagues en élastomère sont adhérées sur les armatures rigides le long de faces cylindriques.

Un exemple de fonctionnement du support ci-dessus décrit est donné ci-après.

L'axe X étant orienté verticalement,
- on fixe les ailes 7 accolées l'une contre l'autre sur le châssis d'un véhicule, notamment par montage de systèmes boulons-écrous ou de rivets dans les trous 8 desdites ailes,
- et l'on suspend le moteur de ce véhicule au manchon 1 par introduction axiale de bas en haut dans ce manchon d'une broche 15, puis par vissage d'un écrou 16 sur l'extrémité filetée supérieure 17 de cette broche, qui fait saillie vers le haut hors dudit manchon, avec interposition d'une rondelle 18 entre ledit écrou et le rabat 14 supérieur de tronçon tubulaire 13.

Le moteur est ainsi supporté par le châssis et les oscillations et vibrations relatives de ce moteur et de ce châssis sont amorties par les déformations élastiques des bagues $3_1, 3_2$ et par le refoulement alternatif du liquide 0 dans le passage étranglé 6.

Sur le dessin, les deux composants annulaires juxtaposés axialement $1_1, 2_1, 3_1$ et $1_2, 2_2, 3_2$ sont représentés symétriques l'un de l'autre par rapport au plan transversal médian du support.

Cette représentation peut correspondre à l'état non chargé du support, comme schématisé sur le dessin.

Mais il peut également correspondre à l'état axialement chargé du support : dans ce dernier cas, bien entendu, les deux composants annulaires présentent des formes différentes au repos, ces formes étant prévues de façon telle que la déformation sous charge des deux composants leur confère des formes identiques en fin de déformation seulement.

A titre purement indicatif, on signale qu'avec un support du genre de celui illustré pour lequel l'épaisseur axiale maximum du bourrelet est de 11 mm, le rayon moyen du passage étranglé, de 38 mm et la largeur radiale de ce passage, de 7 mm, on observe une baisse de la raideur dynamique pour les fréquences de 150 à 300 Hz, ce qui améliore le filtrage des vibrations du moteur à haut régime.

De façon plus générale, les trois cotes ci-dessus sont de préférence comprises respectivement entre 7 et 15 mm, entre 30 et 50 mm et entre 3 et 10 mm.

Comme il va de soi, et comme il résulte d'ailleurs déjà de ce qui précède, l'invention ne se limite nullement à ceux de ses modes d'application et de réalisation qui ont été plus spécfialement envisagés ; elle en embrasse, au contraire, toutes les variantes, notamment celles où le bourrelet annulaire bordant la cloison rigide intermédiaire aurait une forme autre que celle délimitée par deux troncs de cône ci-dessus décrite, cette cloison étant par exemple composée de deux cuvettes à fond plat et à bord relevé à 90 degrés juxtaposées dos à dos.

## Revendications

1. Dispositif destiné à être interposé entre deux pièces rigides aux fins de support de l'une par l'autre avec amortissement de leurs oscillations ou vibrations relatives, comportant un anneau rigide (2) solidarisable avec l'une des pièces, un manchon central (1) dégagé à ses deux extrémités axiales, coaxial à l'anneau et solidarisable avec l'autre pièce, deux bagues en élastomère ($3_1,3_2$) adhérées toutes les deux intérieurement sur le manchon et extérieurement sur l'anneau et délimitant avec ces deux armatures une chambre annulaire étanche (4), une cloison rigide annulaire (5) solidaire de l'une des deux armatures (manchon et anneau) et divisant la chambre en deux compartiments qui communiquent entre eux par un passage annulaire étranglé (6) réservé entre cette cloison et l'autre armature, et une masse de liquide (0) remplissant la chambre et le passage étranglé, le manchon (1), l'anneau (2) et les bagues ($3_1,3_2$) étant agencés de façon à former deux composants annulaires axialement juxtaposés l'une contre l'autre et constitués chacun par une demi-armature interne ($1_1,1_2$), une demi-armature externe ($2_1,2_2$) et une bague intermédiaire ($3_1,3_2$) en élastomère adhérée respectivement sur ces deux demi-armatures, chacune des deux armatures interne (1) et externe (2) étant formée par juxtaposition axiale des deux demi-armatures correspondantes, la solidarisation entre la cloison rigide annulaire (5) et l'armature correspondante étant assurée par serrage axial de cette cloison entre les deux demi-armatures composant cette armature, caractérisé en ce que cette dernière armature est l'armature interne (1), en ce que la portion de plus grand diamètre de la cloison rigide annulaire (5) se présente sous la forme d'un bourrelet (19) épaissi axialement, en ce que chacune des faces le long desquelles les bagues ($3_1,3_2$) sont adhérées sur les demi-armatures internes ($1_1,1_2$) présente une forme tronconique de révolution ou analogue autour de l'axe (X) du dispositif, avec convergence vers l'extérieur de celui-ci, et en ce que la face, de chaque bague ($3_1,3_2$), délimitant la chambre étanche (4) et donc tournée vers le bourrelet (19), présente elle-même une forme tronconique de révolution ou analogue autour de l'axe (X) du dispositif, avec divergence vers l'extérieur de celui-ci.

2. Dispositif de support selon la revendication 1, caractérisé en ce que le bourrelet épaissi (19) est délimité axialement par des surfaces propres à servir d'appui progressif aux bagues en élastomère ($3_1,3_2$) lors de l'exercice de fortes sollicitations axiales sur le dispositif.

3. Dispositif de support selon l'une quelconque des revendications 1 et 2, caractérisé en ce que l'application de chaque bague en élastomère ($3_1,3_2$) contre l'armature interne ($1_1;1$) est renforcée par précontrainte axiale.

4. Dispositif de support selon l'une quelconque des précédentes revendications, caractérisé en ce que les deux demi-armatures internes ($1_1,1_2$) sont juxtaposées axialement l'une contre l'autre et maintenues dans cet état par un tronçon de tube (13) qui les traverse jointivement et dont les extrémités axiales (14) sont rabattues radialement vers l'extérieur.

5. Dispositif de support selon l'une quelconque des précédentes revendications, caractérisé en ce que la cloison rigide annulaire (5) qui sépare la chambre (4) en deux compartiments est perforée de part en part.

0255434

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | PATENT ABSTRACTS OF JAPAN, vol. 9, no. 111 (M-379)[1834], 15 mai 1985; & JP-A-59 231 236 (HONDA GIKEN KOGYO K.K.) 25-12-1984 * Figures 1,2,4,5,8,10,11 * | 1,4,5 | F 16 F 13/00 |
| A | FR-A-2 572 338 (CPIO) * Page 3, lignes 1-15; figures 1-4 * | 1 | |
| A | CH-A- 577 126 (ARFINA) * Colonne 5, ligne 26 - colonne 6, ligne 6; figures 7,8 * | 1,2 | |
| P,A | EP-A-0 207 194 (BOGE) * Page 4, dernier paragraphe - page 5, paragraphe 1; figures 1,2 * | 1,5 | |
| P,A | EP-A-0 223 712 (HUTCHINSON) * En entier * | 1,4 | DOMAINES TECHNIQUES RECHERCHES (Int. Cl.4)<br><br>F 16 F<br>B 60 K |
| A | FR-A-2 357 790 (BOGE) * Page 9, lignes 24-35; figures 3,4 * | 3 | |
| P,A | EP-A-0 191 703 (HUTCHINSON) * Page 6, ligne 37 - page 7, ligne 8; figure * | 1,2 | |
| | --- -/- | | |

Le présent rapport de recherche a été établi pour toutes les revendications

| Lieu de la recherche | Date d'achèvement de la recherche | Examinateur |
|---|---|---|
| LA HAYE | 07-10-1987 | ESPEEL R.P. |

## DOCUMENTS CONSIDERES COMME PERTINENTS

Page    2

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 472 116   (CONTINENTAL GUMMI) | 1,2 | |
| | --- | | |
| A | FR-A- 982 035   (JULIEN) | | |
| | ----- | | |

**DOMAINES TECHNIQUES RECHERCHES (Int. Cl.4)**

Le présent rapport de recherche a été établi pour toutes les revendications

| Lieu de la recherche | Date d'achèvement de la recherche | Examinateur |
|---|---|---|
| LA HAYE | 07-10-1987 | ESPEEL R.P. |